# EUROPEAN PATENT SPECIFICATION

(11) **EP 3 415 406 B1**
(45) Date of publication and mention of the grant of the patent: **12.02.2020**
(21) Application number: 17176274.3
(22) Date of filing: 15.06.2017
(51) Int. Cl.: B62D 35/00

(54) **VEHICLE AERODYNAMIC IMPROVEMENT APPARATUS AND SYSTEM**
VORRICHTUNG UND SYSTEM ZUR VERBESSERUNG DER FAHRZEUGAERODYNAMIK
APPAREIL ET SYSTÈME D'AMÉLIORATION AÉRODYNAMIQUE D'UN VÉHICULE

(43) Date of publication of application: 19.12.2018
(73) Proprietor: Rocketail, LLC, Del Mar, CA 92014 (US)
(72) Inventor: REGAN, Jesse, Denver, CO 80206 (US)
(74) Representative: D Young & Co LLP

(56) References cited:
- JP-A- 2012 081 937
- US-A1- 2010 225 143
- US-A1- 2013 221 701

## Description

### FIELD OF THE INVENTION

The present invention surrounds an apparatus and system for the improvement of aerodynamics of a primary vehicle or a secondary vehicle towed by a primary vehicle.

### BACKGROUND

Despite advances in technology providing more fuel-efficient power generation for vehicles, efforts continue to strive for a more efficient vehicle overall. A large factor in vehicle efficiency lies in the aerodynamics of the vehicle. While the design of smaller road-going passenger vehicles adapts through continuous design revisions between model years, the road-going truck market, particularly the long-haul or Class 8 segment of the market has not been able to adapt as quickly. Also referred to as a "semi-truck" or "semi," long-haul trucks transport mass quantities of goods through the use of trailers sometimes in excess of 50 feet in length and 60,000 pounds of payload capacity. The modern semi-truck trailer has undergone little design improvement for aerodynamic efficiency over several decades. Furthermore, the average fuel economy of a road-going semi-truck towing a loaded trailer is only 7.2 miles per gallon (Davis, Stacy C. 2014 Vehicle Technologies Report. Oakridge, TN: U.S. Dept. of Energy, 2014. ORNL/TM-2015/85). There are currently over 5.6 million semi-trailers registered for use in the United States alone. The lifespan of an average semi-trailer typically spans 12-15 years, as such the immediate redesign of the standard semi-trailer will do little to improve overall efficiency in the near-term. As a result, there is a need for a near-term solution that improves aerodynamic efficiency of semi-trailers in a cost-efficient manner.

Aerodynamic drag is a primary contributing factor to fuel consumption when operating a road-going truck and trailer at highway speeds. Friction drag and pressure drag are two variables surrounding aerodynamic drag. Friction drag surrounds the interaction of the ambient air and the surface of the trailer as it moves through it. However, the effects of friction drag are limited in comparative nature to pressure drag when considering a semi-trailer. Pressure drag is a dominant acting variable in the aerodynamic consideration of a semi-trailer. Pressure drag is caused by large pressure differentials in the wake of a trailer due to rapid flow separation creating turbulent flow characteristics. Turbulent flow characteristics can create such phenomena as a Kármán vortex street, which is a repeating pattern of swirling vortices caused by the unsteady separation of flow of a fluid around blunt bodies. Such turbulent characteristics cause inefficient aerodynamic flow, due to increased pressure drag, and may even create unsafe oscillation of the trailer. In extreme cases this can result in destabilization and tip-over of the trailer and the primary vehicle.

### SUMMARY OF THE INVENTION

Various aspects and features of the present invention are defined by the appended claims.

Efforts to improve aerodynamics of a vehicle such as a semi-trailer by addressing the aft end of the vehicle typically surrounds the improvement of flow separation to provide a more laminar and consistent flow further aft of the vehicle so as to prevent large pressure differentials which may cause eddy formation, vortices or other inefficient flow dynamics. In the improvement of the aerodynamics of a vehicle, it will be appreciated that the convergence of flow, post separation, is desired to converge quickly and with decreased turbulent flow characteristics.

The present invention relates to an apparatus for the improvement of the aerodynamic properties of a primary vehicle or the aerodynamic properties of a secondary vehicle, such as a trailer, towed by a primary vehicle. Examples of a primary vehicle include a semi-truck and examples of a secondary vehicle include a semi-trailer. As disclosed herein the invention typically surrounds embodiments of the invention as applied to a semi-trailer towed by a road-going semi-truck. However, it will be appreciated that the invention as disclosed herein may be applied to different primary or secondary vehicles in alternate configurations to improve aerodynamic properties of the vehicle as applied.

Current devices try to improve the aerodynamics of a semi-trailer by attempting to equalize pressure differentials from the aft portion of the semi-trailer. Others try to equalize the rapid and turbulent flow separation from the aft portion of a semi-trailer. In order to do so, current devices redirect the airflow through the use of deflectors or scoop forms. These deflectors try to equalize airflow pressure of the air that flows along the sides of the trailer with airflow pressure of the air that flows immediately aft of the trailer when in motion. Examples of such devices include U.S. 3,960,402 to Keck, U.S. 4,320,920 to Goudey, U.S. 7,950,720 to Skopic, and U.S. 8,196,995 to Chen. While these references disclose providing a level of pressure differential equalization between the laminar flow prior to an aft plane of a semi-trailer, the aerodynamic drag created by such solutions minimize or negate aerodynamic benefits gained through such equalization. It will be appreciated that the aft plane is typically associated with the rear-most plane of a semi-trailer perpendicular to the path of travel.

Other devices attempt to improve the aerodynamics of a semi-trailer by equalizing pressure differentials by providing planar forms that extend past the aft-plane of a semi-trailer. Other devices attempt to improve aerodynamics by using planar forms that extend past the aft-plane of a semi-trailer to equalize the rapid and turbulent flow separation from the aft portion of a semi-trailer. Examples of such devices include U.S. Patent No. 6,257,654 ("the '654 Patent") to Boivin, et al., U.S. Patent No. 6,485,087 ("the '087 Patent") to Roberge, et al., U.S. Patent No. 6,959,958 ("the '958 Patent") to Basford, U.S. Patent No. 8,382,194 ("the '194 Patent") to Wood, and U.S. Patent No. 9,199,673 ("the '673 Patent") to Baker. These devices, such as the '654 Patent, require up to 1.21 m (4 foot) extension from the aft-plane to provide optimal mitigation of pressure differentials. The same length of extension is also required to mitigate the rapid and turbulent flow separation from the aft portion of a semi-trailer. Indeed, the '654 Patent sometimes requires the use of a third top-mounted planar form. Importantly, using shorter lengths of these planar shaped extensions reduce the aerodynamic benefits, thus teaching away from reducing the size of the extension in order to achieve the desired aerodynamic benefit. Moreover, needing a 1.21 m (4 foot) extension from the aft-plane increases the potential for damage the planar forms. Other devices, such as the '673 Patent, propose collapsing the planar forms. However, collapsing devices are costly, unreliable and difficult to install.

Other devices attempt to improve the aerodynamics of a semi-trailer by using wing-like forms to equalize the pressure differentials. Other devices use curved panels to direct airflow to equalize pressure differentials. These devices, whether wing-like forms or curved panels, are also used to address the rapid and turbulent flow separation from the aft portion of a semi-trailer. These devices are installed offset from the sides a semi-trailer proximate to the aft-plane, to provide pressure equalization and minimize rapid and turbulent airflow separation from the aft portion of a semi-trailer. Examples of such devices include U.S. Patent No. 3,960,402 ("the '402 Patent") to Keck, U.S. Patent No.7,641,262 ("the '262 Patent") to Nusbaum, and U.S. Patent 7,950,720 ("the '720 Patent") to Skopic. These devices, however, increase the risk of colliding with static structures and other vehicles, as the offset from the side and/or top surfaces of the semi-trailer increases the width profile of the trailer. Furthermore, the increased width of the trailer added by these devices may violate the width limitations dictated by the Department of Transportation.

Certain embodiments of the present invention comprise an aerodynamic device intended for use in contact with a trailing vertical edge of an aft-plane of a vehicle. The aerodynamic device has an aperture allowing the redirection of airflow. The redirection of airflow mitigates pressure differentials. The redirection of airflow also mitigates the rapid and turbulent flow separation from the aft portion of a semi-trailer. Other embodiments have a plurality of apertures. Other embodiments have a singular aperture segmented by at least one stiffener. The stiffener or stiffeners are typically axially oriented parallel to the direction of intended airflow.

Certain embodiments of the present invention improve the aerodynamics by having an aerodynamic device with apertures. The aerodynamic device has an airfoil, and a stabilizer. In certain embodiments, the airfoil is located proximate to the aperture leading edge, and the stabilizer is located proximate to the aperture trailing edge. It will be appreciated that other embodiments may be configured where the airfoil is proximate to the trailing edge of the aperture and the stabilizer proximate to the aperture leading edge.

Certain embodiments may use an airfoil having a thin-form in concert with a stabilizer to modify airflow direction. An airfoil, such as in the form of a sheet with a curved profile, provides an outboard surface and an inboard surface substantially similar arc lengths as opposed the form of a wing-form airfoil having an outboard (upper) surface and inboard (lower) surface with differing arc lengths. The use of an airfoil having a thin-form as described provides, in certain embodiments, a lighter apparatus for the improvement of aerodynamics of a vehicle. A thin-form air-foil in certain embodiments also provides the benefit of a smaller cross-sectional area presented to the general airflow providing lower aerodynamic drag forces known as form-drag. Form drag is understood by those skilled in the art to depend upon a cross-sectional profile of a form wherein the cross-section is orthogonal to the general airflow.

Certain embodiments of the present invention provide airflow inlets and airflow outlets for the ducting of the general airflow over inboard and outboard surfaces of an airfoil, a stabilizer, and other features that may be used with such an apparatus in the improvement of aerodynamics of a vehicle. Such ducting allows for preparation of the general airflow surrounding a vehicle prior to the interaction with certain elements such as an airfoil or stabilizer. Furthermore, such ducting allows for directing a desired portion of the general airflow to interact with inboard and outboard surfaces associated with an airfoil or stabilizer.

In certain embodiments, the preparation of the general airflow prior to interactions with an airfoil or stabilizer provides a cleaner general airflow. It will be appreciated that inefficient flow dynamics turbulence caused by eddies and vortices may exist along external surfaces of a vehicle. Such turbulence may be caused by surroundings such as separation between portions of a vehicle (such as between a semi-truck and a trailer), or cross-winds. The preparation of the airflow, such as through ducting, decreases inefficient flow dynamics from the general airflow. The interaction of turbulence negatively impacts the operation of an apparatus for the improvement of aerodynamics. In certain scenarios, turbulence may cause oscillation of, and potentially damage such an apparatus. The decrease of inefficient flow-dynamics through ducting allows higher efficiency operation of an apparatus as described.

Certain embodiments of the present invention comprise a system for the improving the aerodynamics of a vehicle. In certain embodiments, the system has at least two aerodynamic devices. One aerodynamic device is attached on one side of the vehicle and the other aerodynamic device is attached to the other side of the vehicle. A leading edge of one aerodynamic device is affixed to the left vertical edge of an aft-plane of a vehicle. A leading edge of a second aerodynamic device is affixed to the right vertical edge of the aft-plane of a vehicle. Attaching the aerodynamic devices mitigate the pressure differentials. Attaching the aerodynamic devices also mitigates the rapid and turbulent flow separation from the aft portion of the vehicle. In certain embodiments, the aerodynamic devices are affixed using a hinge mechanism. In certain embodiments, the default configuration of the aerodynamic devices is extending rearward from the aft-plane of the vehicle. The hinged attachment allows the aerodynamic device to pivot when a door is opened. The hinge mechanism of the system also allows for a user to pivot an aerodynamic device inward to rest in contact with the aft-plane such as the surface of a closed rear-door of a semi-trailer. It will be appreciated that the aft-plane of a vehicle, refers to a vertical plane at the rearmost portion of a vehicle body.

### BRIEF DESCRIPTION OF FIGURES

Embodiments of the disclosure will now be described by way of example only, with reference to the accompanying drawings in which:
Fig. 1. Perspective view of an outward face of a planar form in certain embodiments.
Fig. 2. Perspective view of an inward face of a planar form in certain embodiments.
Fig. 3. Perspective view of a planar forms attached to a vehicle in certain embodiments.
Fig. 4. Top view of a planar form attached to a trailing edge of a vehicle in certain embodiments.
Fig. 5A. A typical air-foil.
Fig. 5B. A cross-sectional view of an air foil form and a stabilizer component of a planar form in certain embodiments.
Fig. 6. Plan view of a planar form in certain embodiments.
Fig. 7A. Perspective cross-sectional view of a planar form in certain embodiments.
Fig. 7B. A cross-sectional view of a planar form in certain embodiments.
Fig. 7C. A cross-sectional view of a planar form in certain embodiments.
Fig. 7D. A cross-sectional magnified view of a stabilizer component of a planar form in certain embodiments.
Fig. 7E. A cross-sectional magnified view of a stabilizer component of a planar form in certain embodiments.
Fig. 7F. A cross-sectional magnified view of a stabilizer component of a planar form in certain embodiments.
Fig. 8. Bottom perspective view of a planar form attached to a vehicle in certain embodiments.
Fig. 9A. Perspective view of an inward face of a planar form in certain embodiments.
Fig. 9B. Perspective view of a rear potion of a vehicle having a planar form.
Fig. 9C. Perspective view of a hinge attached to a vehicle in certain embodiments.
Fig. 9D. Exploded view of a hinge in certain embodiments.
Fig. 10. Perspective view of a planar form attached to a vehicle in certain embodiments.
Fig. 11. Simulation results comparing an embodiment of the present invention to a reference vehicle without aerodynamic improvements.
Fig. 12A. Simulation results comparing an embodiment of the present invention to a reference vehicle with over-sized flat panels.
Fig 12B. Close-up view of simulation results shown in Fig. 12A.
Fig. 13A. Front perspective view of an aerodynamic device.
Fig. 13B. Rear perspective view of the aerodynamic device.
Fig. 13C. Bottom perspective view of the aerodynamic device.
Fig. 14. Front perspective view of a convex aerodynamic device
Fig. 15. Rear perspective view of a vehicle including a top element coupled to the top of the vehicle and aerodynamic devices coupled to the sides of the vehicle.

### DETAILED DESCRIPTION OF CERTAIN EMBODIMENTS

The present disclosure surrounds an apparatus and system for the aerodynamic improvement of a vehicle, typically surrounding airflow near a rear-ward portion of the vehicle. Embodiments of the present disclosure describe an apparatus and a system typically mounted to a rear-ward portion of a semi-trailer for aerodynamic improvement. The aerodynamic improvements as applied mitigate inefficient aerodynamic phenomena. Such aerodynamic phenomena may include but is not limited to: Kármán vortex street, rapid flow separation and turbulent flow characteristics.

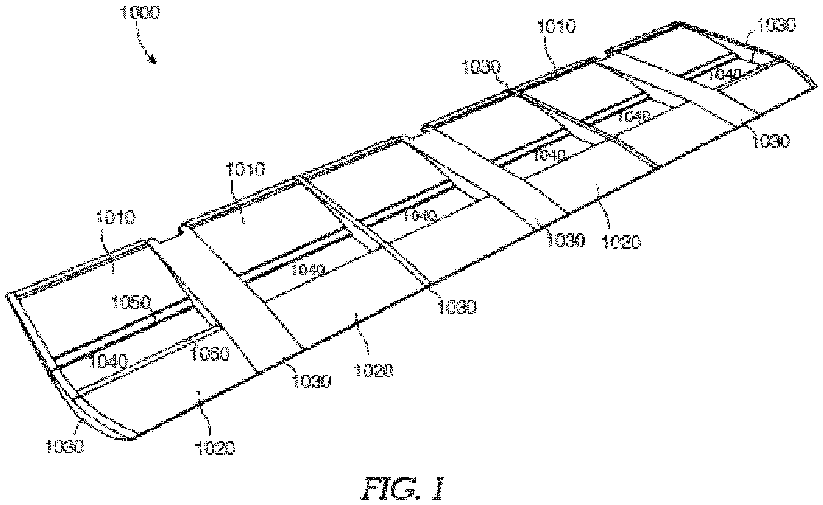

An apparatus, as shown in **Fig. 1** comprises an aerodynamic device **1000** further comprising an airfoil **1010** and a stabilizer **1020** interconnected by a series of stiffeners **1030** spanning between them. The apparatus further comprises a plurality of apertures **1040** defined by a trailing edge **1050** of the airfoil **1010**, a leading edge **1060** of a stabilizer **1020**, and two stiffeners **1030.**

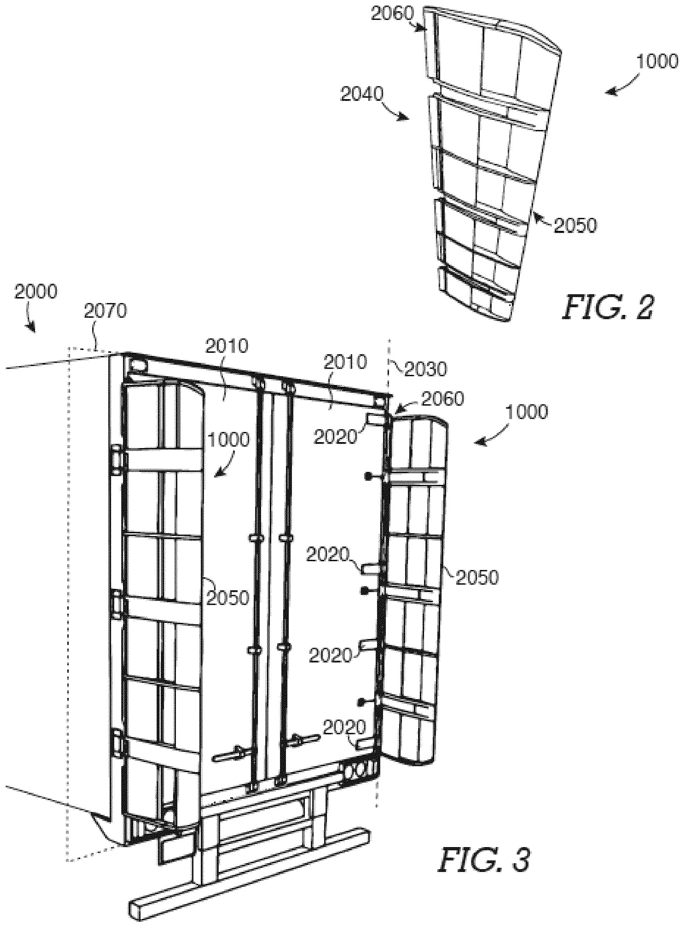

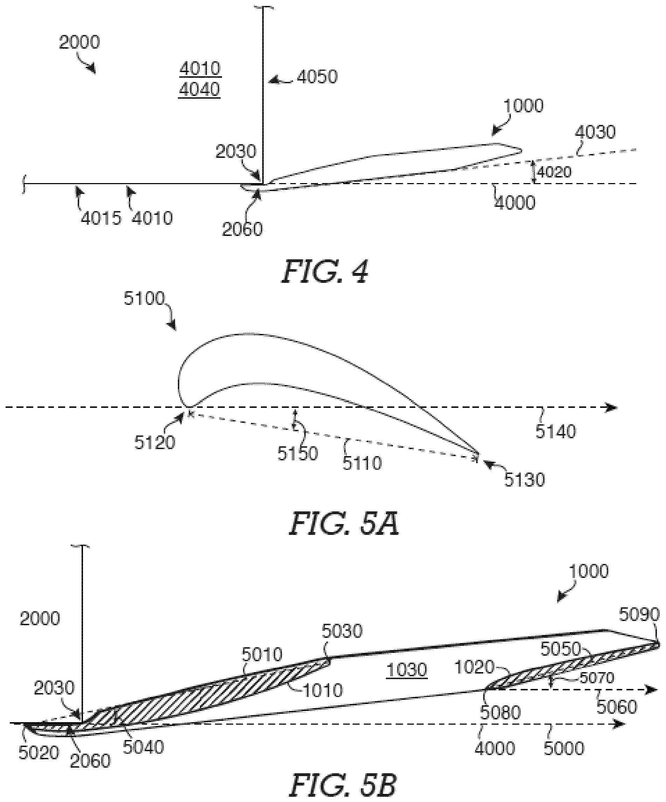

Certain embodiments of an apparatus, as shown in **Fig. 2** and **Fig. 3** comprise an aerodynamic device **1000** having a leading edge **2040** and a trailing edge **2050.** The aerodynamic device **1000**, referring to **Fig. 2**, further comprises an edge-recess **2060** near the aerodynamic device leading edge **2040.** Referring to **Fig. 4**, the edge-recess **2060** of certain embodiments is configured to mate with a vertical trailing edge **2030** of a vehicle **2000.** Referring to **Fig. 3**, it will be appreciated that certain vehicles **2000** have door hinges **2020** associated with doors **2010** coincident with an aft-plane **2070.** Referring again to **Fig. 3**, an edge-recess **2060** of an aerodynamic device **1000** is configured to provide clearance between the aerodynamic device 1000 and a door hinge **2020** proximate to the trailing edge **2030** of a vehicle **2000.**

In certain embodiments as shown in **Fig. 4**, an apparatus for the aerodynamic improvement of a vehicle comprising an aerodynamic device **1000** is mated to a vertical trailing edge **2030** of a vehicle **2000** disposed at a device offset angle **4020** from a reference plane **4000.**

In certain embodiments, a reference plane **4000** is coincident with an external planar surface **4010** of a vehicle **2000.** The reference plane **4000** in the context of a semi-trailer is coincident with an external planar surface **4010** of the semi-trailer, such as a side-surface **4015** or top surface **4040.** It may be desired to attach the aerodynamic device **1000** to the vertical trailing edge **2030** of the vehicle **2000** with the aerodynamic device **1000** directed inward toward the vehicle. It may be further desired to direct the aerodynamic device **1000** inward toward the vehicle at a device offset angle **4020** of 7-degrees inward from a reference plane **4000.**

As shown in **Fig. 5A**, it will be appreciated by those skilled in the art that a chord **5110**, as used in reference to an aerodynamic form **5100**, refers to a measurement aligned with the flow profile of the aerodynamic form **5100.** The chord **5110** spans from a leading edge **5120** to a trailing edge **5130** of the aerodynamic form **5100.** The angle of attack **5150** will be appreciated by those skilled in the art as indicating an angle between the general airflow **5140**, also referred to as relative wind, and the chord **5010.** In certain embodiments discussed herein, the airflow **5140** is parallel to a reference plane of a vehicle.

Certain embodiments, referring to **Fig. 5B**, comprises an aerodynamic device **1000** further comprising an airfoil **1010**, a stabilizer **1020**, a stiffener **1030** and an edge-recess **2060.** The airfoil **1010** has an airfoil chord **5010** spanning from an airfoil leading edge **5020** to an airfoil trailing edge **5030.** The stabilizer **1020** has a stabilizer chord **5050** spanning from a stabilizer leading edge **5080** to a stabilizer trailing edge **5090.** In such embodiments the edge-recess **2060** is configured to interface with a trailing vertical edge **2030** of a vehicle **2000.** With the edge-recess **2060** remaining parallel to a reference plane **4000** of the vehicle **2000**, the airfoil angle of attack **5040** and stabilizer angle of attack **5070** may be disposed at an angle greater than zero. It may also be desired for the airfoil angle of attack **5040** and stabilizer angle of attack **5070** to be set at different values. It may be further desired to have the stabilizer leading edge **5080** offset laterally inward from the reference plane **4000.**

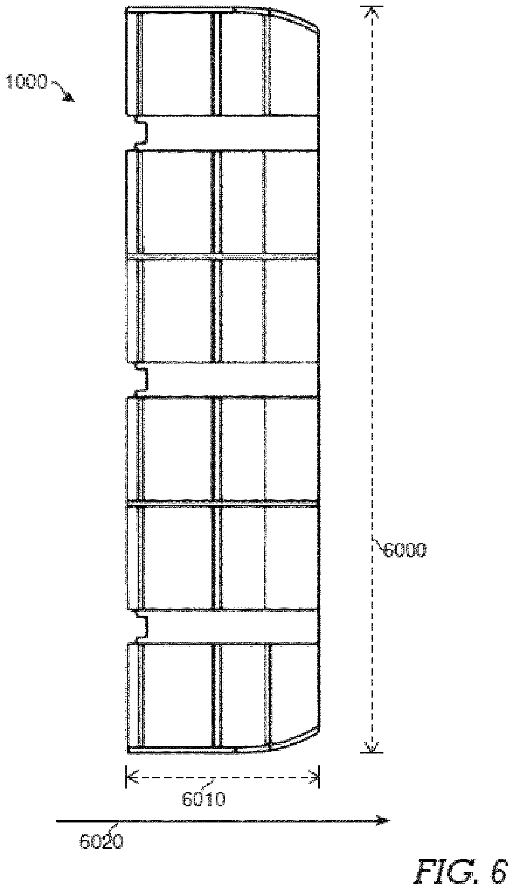

In certain embodiments, as shown in **Fig. 6**, for the aerodynamic improvement of a vehicle further comprising an aerodynamic device **1000** is configured for fixation proximal to a trailing vertical edge of a semi-trailer. In a variation of such embodiments, the length **6000** of the aerodynamic device, spans 271.7cm (107 inches) and the width **6010** spans 68.6cm (27 inches). In such embodiments, the width of the aerodynamic device or portion thereof extends rearward, in the direction of general airflow **6020** and away from the semi-trailer.

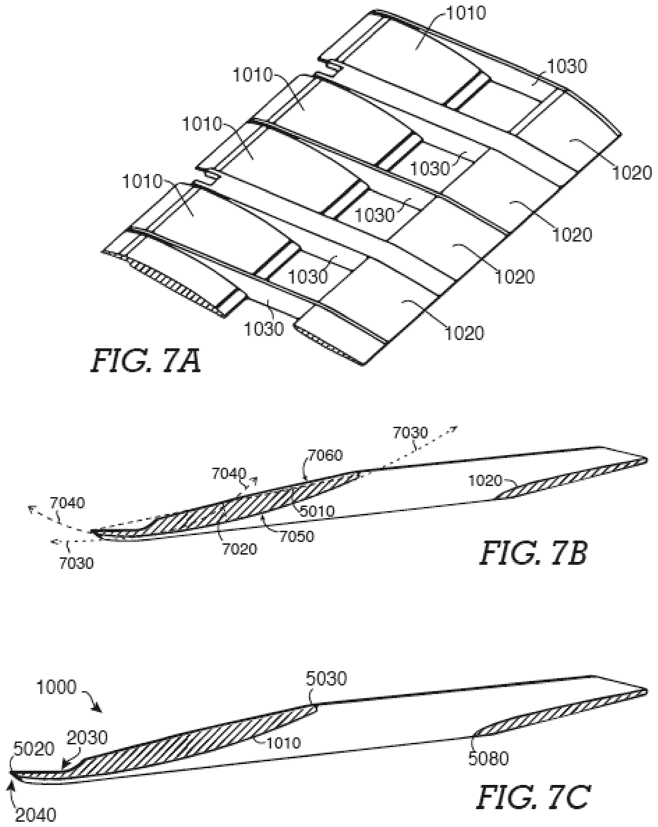

Certain embodiments of an apparatus comprising an aerodynamic device **1000**, as shown in **Fig. 7A**, further comprises an airfoil **1010** in coordination with a stabilizer **1020** interconnected by a plurality of stiffeners **1030.** Referring to **Fig. 7B**, an airfoil **1010** has a chord length **5010** of 33.8 cm (13.3 inches) and a maximum thickness **7020** of approximately 2.5 cm (1 inch). The airfoil **1010** has an airfoil primary surface **7050** as defined by an airfoil leading arc **7040** of radius of 61cm (24 inches) coincident with the airfoil leading edge **2040.** The airfoil primary surface is further defined by an airfoil trailing arc **7030** of radius of 121.9cm (48 inches), such that the airfoil trailing arc **7030** is coincident with the airfoil trailing edge **5030** and tangential to the airfoil leading arc **7040.** In certain embodiments, an airfoil **1010** has a substantially planar secondary airfoil surface **7060.** In such embodiments, the airfoil angle of attack **5040** is 11.5-degrees from a reference line defined by the edge recess **2060** configured to interface with a reference plane **4000** of a vehicle **2000** as shown in **Fig. 5B****.** In such embodiments, referring to **Fig. 7C**, the airfoil **1010** leading edge **2040** is coincident with the aerodynamic device leading edge **2040.**

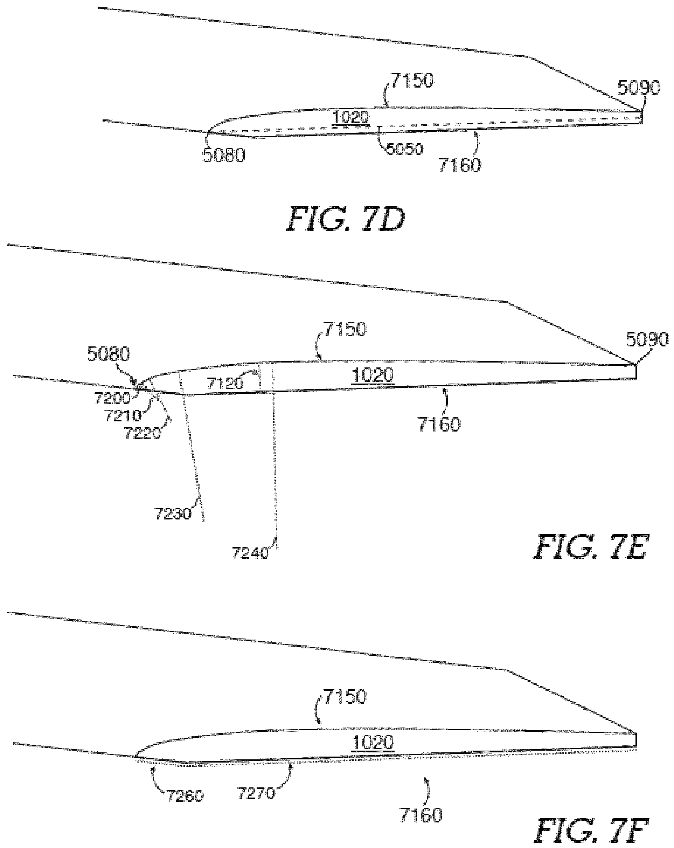

Referring to **Fig. 7D** and **Fig. 7E**, certain embodiments of a stabilizer **1020** has a primary stabilizer surface **7150** and a substantially planar secondary stabilizer surface **7160.** In such embodiments, a stabilizer **1020** has stabilizer chord **5050** of length 19.4cm (7.62 inches) and a stabilizer maximum thickness **7120** of 1.27cm (0.5 inch). A primary stabilizer airflow surface **7150** is defined by a stabilizer leading edge **5080** with a .51cm (0.2 inch) leading edge arc **7200** connected to a series of tangentially interconnected arcs spanning from the stabilizer leading edge **5080** to the stabilizer trailing edge **5090.** Following the leading edge arc **7200** is a first stabilizer arc **7210** of 1.0 cm (0.4 inch), then a second stabilizer arc **7220** of 1.9cm (0.75 inch), a third stabilizer arc **7230** of 7.62 cm (3 inches), and a fourth stabilizer arc **7240** of 88.9 cm (35 inches) extending to a stabilizer trailing edge **5090.** The stabilizer trailing edge **5090** of such embodiments has a thickness 1.0 cm (0.4 inch).

Referring to **Fig. 7F**, in certain embodiments, the secondary stabilizer surface **7160** comprises two planar segments having a first planar segment **7260** of 1.9 cm (0.75 inch) and a second planar segment **7270** of 17.2cm (6.8 inches). In certain embodiments, as shown in **Fig. 7c**, the stabilizer is disposed such that the stabilizer leading edge **5080** is 49.5cm (19.5 inches) laterally from the airfoil leading edge **2040** and offset 3.6 cm (1.4 inches) from the edge recess **2030.** In such embodiments, the angle of attack of the stabilizer is disposed at an angle of 14-degrees from the reference line.

It will be appreciated to those skilled in the art that the form, angle of attack, size and location of an airfoil and a stabilizer may vary between vehicle applications, intended speed of vehicle and general environment in which the vehicle operates in based on aerodynamic optimization practices.

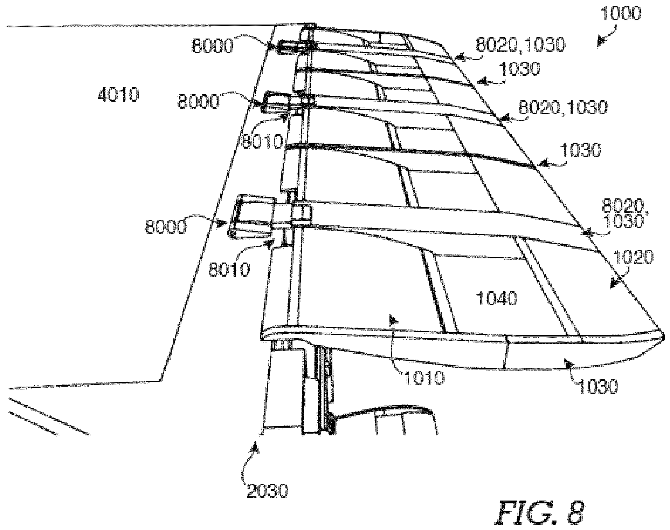

An apparatus, as shown in **Fig. 8**, comprising an aerodynamic device **1000** with stiffeners **1030,** an airfoil **1010** and stabilizer **1020.** In such an embodiment, a stiffener **1030** further comprises a mounting stiffener **8020.** Mounting stiffeners **8020** are configured to affix to the vertical trailing edge **2030** of a vehicle using a hinged mount **8000** affixed to a vertical trailing edge **2030** of a vehicle **2000.**

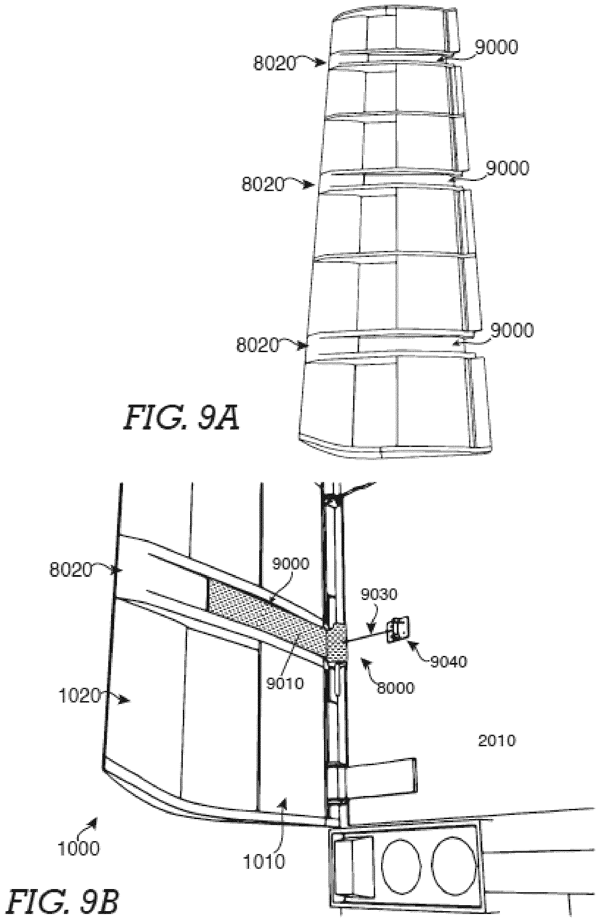

In certain embodiments of the invention, as shown in **Fig. 9A**, comprise an aerodynamic device **1000** with a plurality of mounting stiffeners **8020.** Referring to **Fig. 9A**, it may be so desired to configure a mounting stiffener **8020** with a channel recess **9000** longitudinally along the length on the inward side of the mounting stiffener **8020.** Referring to **Fig. 9B**, the hinged mount **8000** comprises a brace structure **9010** configured to interface with and be affixed within a channel recess **9000** of the mounting stiffeners **8020.** Referencing **Fig. 8**, the rotative positioning provided by the hinged mounts **8000** allow movement of the aerodynamic device **1000** to prevent the aerodynamic device **1000** from interfering with the swing of a door **2010** opening outward. As shown in **Fig. 8**, it may be desired in certain embodiments for the aerodynamic device **1000** to further comprise clearance notches **8010** configured to allow clearance around a hinged mount **8000**, preventing interference between the aerodynamic device **1000** and the hinged mount **8000.**

Certain embodiments of an apparatus, referring to **Fig. 9B** are configured for use with a vehicle **2000** with aft-plane mounted doors **2010** which swing outward. The apparatus comprising an aerodynamic device **1000** and hinged mounts **8000**, further comprises a tensile component **9030.** The tensile component **9030** provides tensile constraint to the aerodynamic device **1000**, maintain a maximum predetermined angular offset from the aft-plane **2070.** In such embodiments, a first end of the tensile component **9030** is affixed to an inward facing surface the aerodynamic device **1000** and a second end of the tensile component **9030** is affixed to an anchor component **9040.** The anchor component **9040** is affixed to a planar surface such as a door **2010**, as may be the case with a semi-trailer. In such embodiments, the aerodynamic device is permitted to rotate outwardly in conjunction with the outward swing of the door **2010** to prevent interference when the door **2010.** It may be desired in such embodiments for the hinge mechanism to have an intermediate mechanical stop to prevent the inward rotation of the aerodynamic device beyond the predetermined angular separation from the aft-plane. It may also be desired for the tensile component **9030** to be configured for easy detachment.

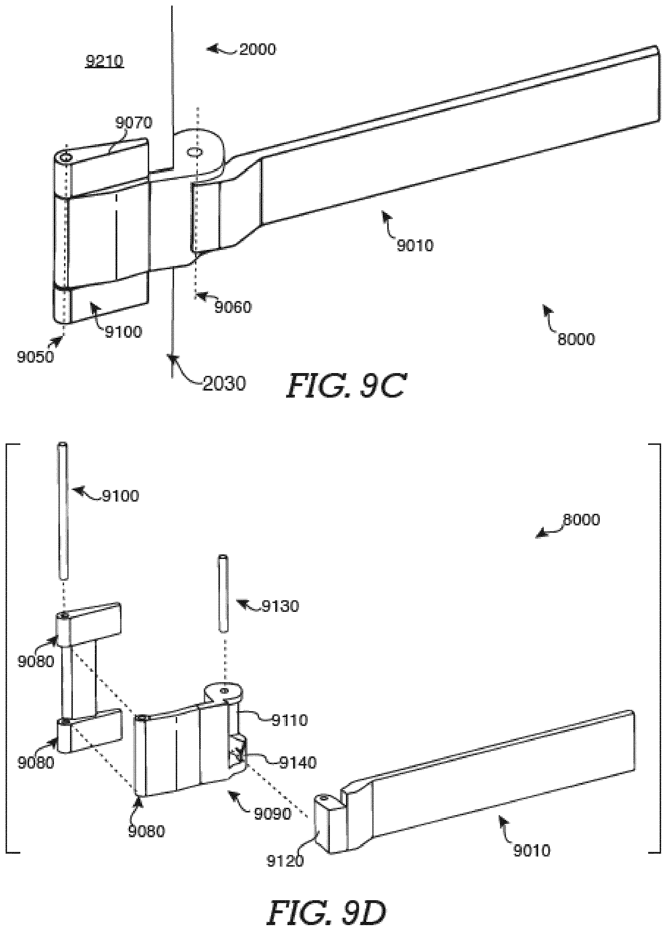

Referring to **Fig. 9C** and **9D**, certain embodiments of a hinged mount **8000** comprising a brace structure **9010** further comprises a first hinge pivot axis **9050** and a second hinge pivot axis **9060.** In such embodiments, a static mount plate **9070** having is attached to an exterior planar surface **4010** of a vehicle **2000**, typically proximate to a vertical trailing edge **2030.** The static mount plate **9070** has a plurality of hinge knuckles **9080.** An intermediate hinge component **9090** having at least one hinge knuckle **9080** at first distal end mates with said static mount plates **9070** having first and second hinge knuckles **9080.** The hinge knuckle **9080** of the intermediate hinge component **9090** is configured to interface between the hinge knuckles **9080** of the static mount plate **9070** aligning the hinge knuckles. This alignment of hinge knuckles **9080** allows a first pin component **9100** to be disposed through the aligned hinge knuckles **9080** to provide axial constraint between the static mount plate **9070** and the intermediate hinge component **9090** along the first hinge pivot axis **9060.** The intermediate hinge component **9090** has a receiving feature **9110** at a second distal end configured to receive a mating feature at a first distal end of the brace structure **9010.** In such embodiments the mating feature of the brace structure **9010** comprises a brace structure knuckle **9120.** The brace structure knuckle **9120** and receiving feature **9110** each have a through-hole of equal diameter configured to align with the second hinge pivot axis **9060.** The alignment of the through-holes along the second hinge pivot axis **9060** allows the insertion of a second pin component **9130** to provide axial constraint between the intermediate hinge component **9090** and the brace structure **9010.**

Certain embodiments of the referring again to **Fig. 9D**, the receiving feature **9110** of the intermediate hinge component **9090** further comprises a mechanical stop **9140.** The presence of the mechanical stop **9130** prevents axial rotation inward toward the vehicle **2000.** However, the lifting of the brace structure **9010** allows the bypassing of the mechanical stop **9140.** In embodiments where the brace structure **9010** is affixed to an aerodynamic device for the attachment to a vehicle, this allows a user to store the aerodynamic device against the aft-plane of the vehicle **2000.**

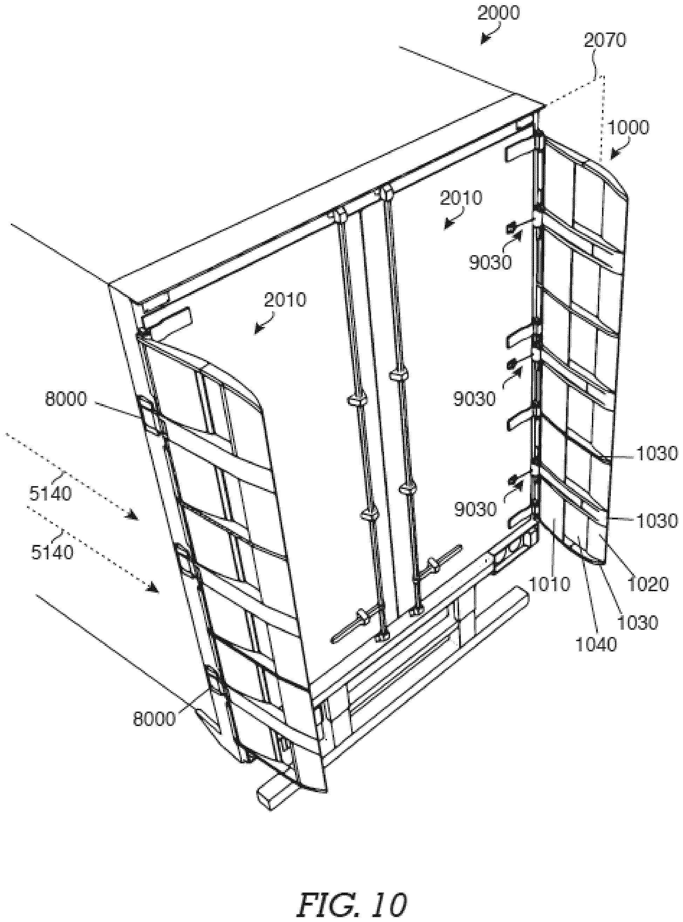

In certain embodiments of the invention, as shown in **Fig. 10**, comprise a system for the aerodynamic improvement of a vehicle such as a semi-trailer. Such embodiments comprise a plurality of aerodynamic devices **1000**, each attached to the vehicle **2000** in proximity to the aft-plane of the vehicle. The aerodynamic devices **1000** are configured to interact with airflow **5140** surrounding the vehicle associated with the forward travel of the vehicle. The aerodynamic devices further comprise an airfoil **1010**, a stabilizer **1020**, a plurality of stiffeners **1030** and a plurality of apertures **1040.** Certain embodiments of the invention dispose the aerodynamic devices **1000** parallel with the general direction of airflow **5140** along the vehicle **2000** while alternate embodiments dispose the aerodynamic devices **1000** at a device offset angle **4020** from the direction of airflow **5140.** In certain alternative embodiments, the aerodynamic devices **1000** are disposed at a device offset angle **4020** of 7-degrees inward toward the vehicle **2000.** The plurality of aerodynamic devices **1000** affixed to the vehicle **2000** using a hinged mechanism **8000** allows the rotative repositioning of the aerodynamic devices **1000** in relation to the vehicle **2000** to prevent interference with such operations as the opening of a door **2010.** The system further comprises a plurality of tensile components **9030** affixed between each aerodynamic device **1000** and to maintain an angular separation from the aft-plane **2070** of the vehicle **2000** when the doors **2010.**

It will be appreciated to those skilled in the art that the fixation of the apparatus or system as disclosed herein need not be affixed in a hinged manner and one or more aerodynamic devices **1000** may be statically affixed to the vehicle.

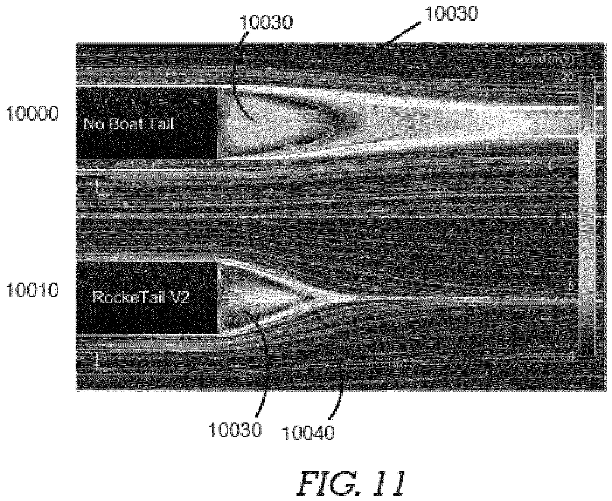

As shown in **Fig. 11**, comparative simulations were conducted in accordance with SAE J1252 testing protocol. The comparative test surrounded two vehicles: A baseline truck **10000** and a test truck **10010.** The baseline truck **10000** is equipped with a standard tractor and 53 ft trailer with no aerodynamic improvements. The test truck **10010** is equipped with a standard semi-truck and 53-foot semi-trailer with a certain embodiment of the aerodynamic device as discussed herein. The tapering of flow dynamics as shown behind the test truck **10010** demonstrates more efficient conversion from turbulent flow **10030** to a laminar flow **10040** pattern trailing the semi-trailer than that of the reference truck **10000.** The more efficient conversion to laminar flow **10040** translates into lower pressure differentials and mitigated turbulent flow characteristics, which are factors associated with improving aerodynamic efficiency.

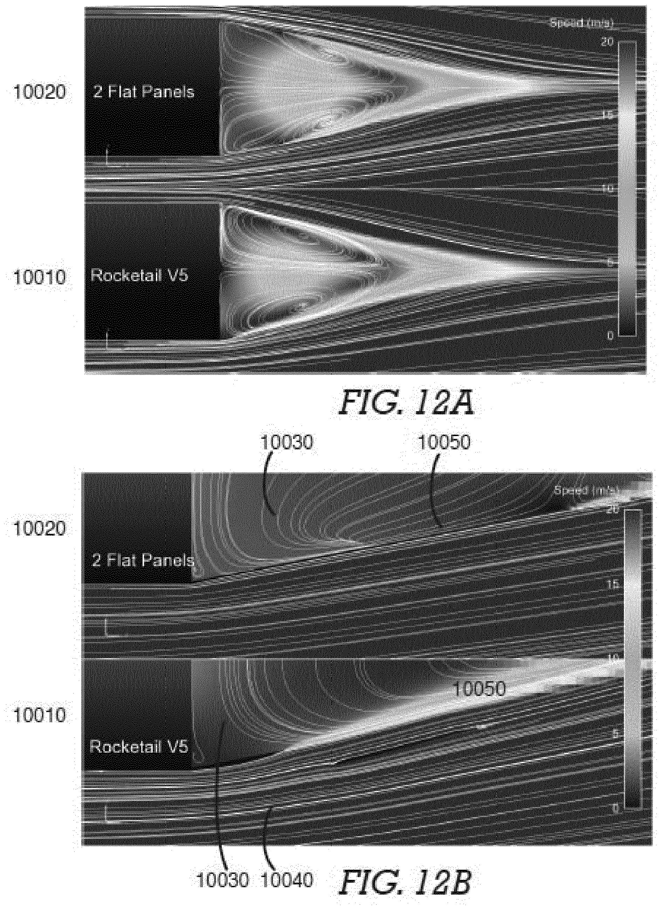

As shown in **Fig. 12A**, comparative simulations were conducted in accordance with SAE J1252 testing protocol. The comparative test surrounded two vehicles: A reference truck **10020** and a test truck **10010.** The reference truck **10020** is equipped with a standard tractor and 53-foot trailer with aerodynamic improvements comprising two flat panels mounted at the vertical trailing edges of the reference truck **10020** extending rearward 4 feet and having an optimal angle of attack of 11-degrees inward toward the semi-trailer (Salari, Kambiz DOE's Effort to Improve Heavy Vehicle Aerodynamics through Joint Experiments and Computations. Lawrence Livermore Laboratory, 2013. LLNL-PRES-629672). The test truck **10010** is equipped with a standard semi-truck and 53 foot semi-trailer with a certain embodiment of the aerodynamic device as discussed herein extending away from the semi-trailer rearward 27 inches and having an angle of attack of 7-degrees inward toward the semi-trailer. As shown, the efficiency of conversion to laminar flow **10040** between the reference truck **10020** and the test truck **10010** are similar despite the aerodynamic device extending rearward less than half the distance than that of the flat panels of the reference truck **10020.** As shown in **Fig. 12B**, upon closer inspection of boundary region **10050** between the laminar flow **10040** and the turbulent flow **10030**, it is apparent that the flow dynamics show less turbulent flow **10030** in the case of the test truck **10010** due to pressure equalization provided by airflow redirection.

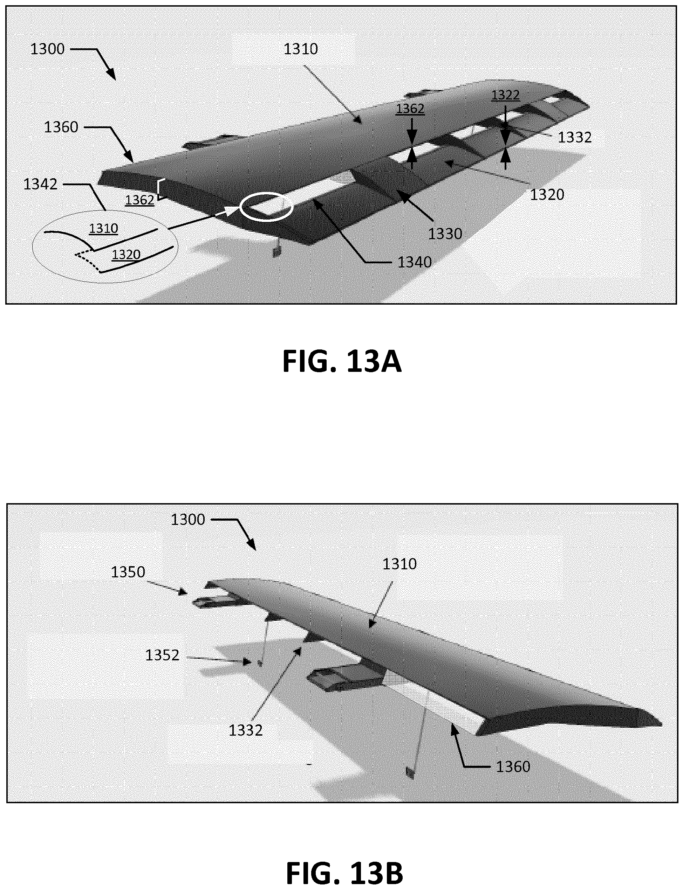

**Fig. 13A** is a front perspective view of an aerodynamic device **1300** in accordance with another embodiment of the present invention. In the illustrated embodiment of **Fig. 13A**, the aerodynamic device **1300** includes a primary airfoil **1310** and a secondary airfoil **1320** (which acts as a stabilizer) interconnected by a series of stiffeners **1330** and struts **1332** spanning between them. In one embodiment, the secondary airfoil **1320** is configured to reduce the airflow separation from the primary airfoil **1310.**

**Fig. 13B** is a rear perspective view of the aerodynamic device **1300** in accordance with another embodiment of the present invention. The rear perspective view of the aerodynamic device **1300** shown in the illustrated embodiment of **Fig. 13B** further includes: a hinge **1350** configured to mount to the side of the trailer; and a locking rod **1352** configured to attach to the trailer door for auto deploying and/or retracting of the aerodynamic device **1300.** The view of **Fig. 13B** also shows the rear view of the struts **1332.**

In the illustrated embodiments of **Figs. 13A** and **13B**, certain embodiments may use a primary airfoil **1310** having a thin-form in concert with a stabilizer **1320** to modify airflow direction. For example, the primary airfoil **1310**, such as in the form of a sheet with a curved profile, provides an outboard surface and an inboard surface with substantially similar arc lengths as opposed to the form of a wing-form airfoil having an outboard (upper) surface and inboard (lower) surface with differing arc lengths. The use of an airfoil having a thin-form as described provides, in certain embodiments, a lighter apparatus for the improvement of aerodynamics of a vehicle. A thin-form air-foil in certain embodiments also provides the benefit of a smaller cross-sectional area presented to the general airflow providing lower aerodynamic drag forces known as form-drag. Form drag is understood by those skilled in the art to depend upon a cross-sectional profile of a form wherein the cross-section is orthogonal to the general airflow. Such an airfoil may be desired to provide a concave and a convex side of an airfoil, configured to interact with the general airflow.

In the illustrated embodiments of **Figs. 13A** and **13B**, certain embodiments provide airflow inlets **1360** and airflow outlets **1340** for the ducting of the general airflow over inboard and outboard surfaces of an airfoil, a stabilizer, and other features that may be used with such an apparatus in the improvement of aerodynamics of a vehicle. Such ducting allows for preparation of the general airflow surrounding a vehicle prior to the interaction with certain elements such as an airfoil or stabilizer. Furthermore, such ducting allows for directing a desired portion of the general airflow to interact with inboard and outboard surfaces associated with an airfoil or stabilizer.

In the illustrated embodiments of **Figs. 13A** and **13B**, the preparation of the general airflow prior to interactions with an airfoil or stabilizer provides a cleaner general airflow. It will be appreciated that inefficient flow dynamics turbulence caused by eddies and vortices may exist along external surfaces of a vehicle. Such turbulence may be caused by surroundings such as separation between portions of a vehicle (such as between a semi-truck and a trailer), or cross-winds. The preparation of the airflow, such as through ducting, decreases inefficient flow dynamics from the general airflow. The interaction of turbulence negatively impacts the operation of an apparatus for the improvement of aerodynamics. In certain scenarios, turbulence may cause oscillation of, and potentially damage such an apparatus. The decrease of inefficient flow-dynamics through ducting allows higher efficiency operation of an apparatus as described.

Referring to **Fig. 13A**, inset **1342** shows the detailed design of the primary airfoil **1310** and the second airfoil **1320** (i.e., the stabilizer). According to **Fig. 13A**, certain embodiments of an apparatus for the improvement of aerodynamics of a vehicle comprise an airfoil **1310** offset from an exterior surface of a vehicle and a stabilizer **1320** wherein the airfoil **1310** overlaps the stabilizer **1320.** Such an overlap provides a configuration wherein the apparatus has an airflow inlet **1360** and an airflow outlet **1340.** A portion of the general airflow from the exterior surface of the vehicle is directed into the airflow inlet **1360** of the apparatus and along the inboard surface of the airfoil **1310.** A portion of the general airflow flowing along the inboard surface of the airfoil **1310** is directed through the airflow outlet **1340** for subsequent interaction with the stabilizer **1320.** Furthermore, a portion of the general airflow flowing along the outboard surface of the airfoil **1310** is directed through the airflow outlet **1340** for subsequent interaction with the stabilizer **1320.**

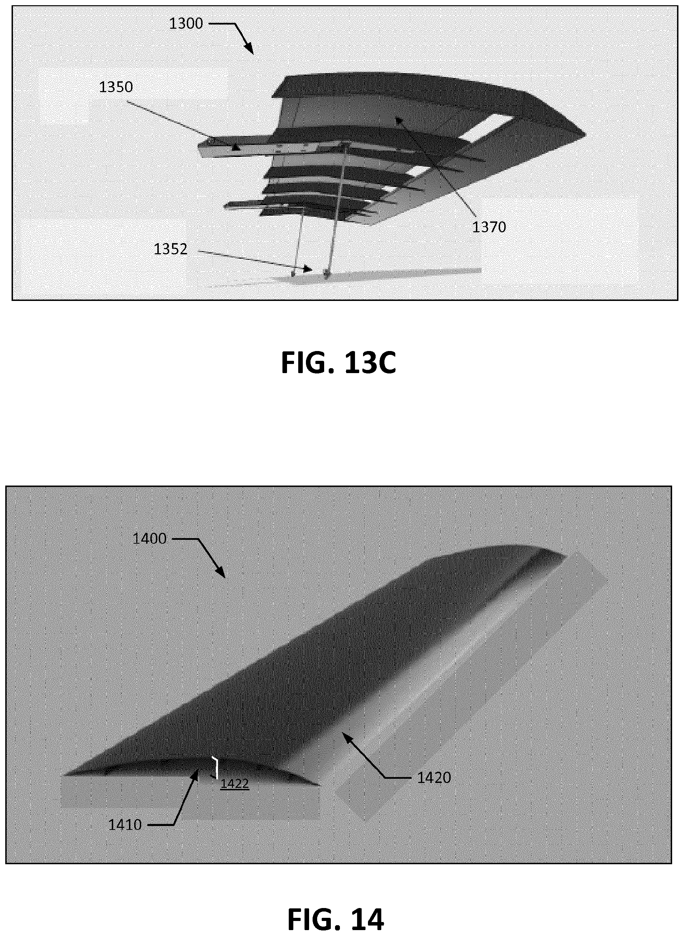

**Fig. 13C** is a bottom perspective view of the aerodynamic device **1300** in accordance with another embodiment of the present invention. The bottom perspective view of the aerodynamic device **1300** shown in the illustrated embodiment of **Fig. 13C** further includes an air channel 1370 which allows the air to flow under the primary airfoil **1310** and over the second airfoil **1320.** The view of **Fig. 13C** also shows the bottom view of the hinge **1350** and the locking rod **1352.**

**Fig. 14** is a front perspective view of a convex aerodynamic device **1400** in accordance with one embodiment of the present invention. In the illustrated embodiment of **Fig. 14**, the improved aerodynamic device **1400** is configured into a convex form **1410** which may be affixed to a top surface of the vehicle. Typically, such a convex form is mounted substantially perpendicular to the general airflow surrounding a vehicle wherein the convex aerodynamic device **1400** extends beyond the boundary region and into the general airflow region **1420.** Such embodiments of a convex form **1410** serve to improve flow separation from airflow traveling in contact or close proximity to the top surface of a vehicle. The improvement of flow separation from the top of the vehicle serves to decrease drag caused by eddy formation, vortices or other inefficient flow dynamics.

Given the above description of the airflow and the designs of the airfoils and devices shown in **FIGS. 13A** through **14**, the radius of curvatures and thicknesses of the airfoils and devices can vary as shown. For example, in one implementation shown in **FIG. 13A**, the radius of curvature **1362** of the primary foil **1360** is designed to be approximately 1 inch. Also, as shown in **FIG. 13A**, the thickness **1362** of the primary airfoil **1360** is designed to be approximately 0.20 to 0.25 inches thick, while the thickness **1322** of the secondary airfoil **1320** is designed to be approximately between 1/8 to 3/8 of an inch. Further, as shown in **FIG. 14**, the radius of curvature **1422** of the aerodynamic device **1400** is designed to be approximately between 1 and 1.75 inches.

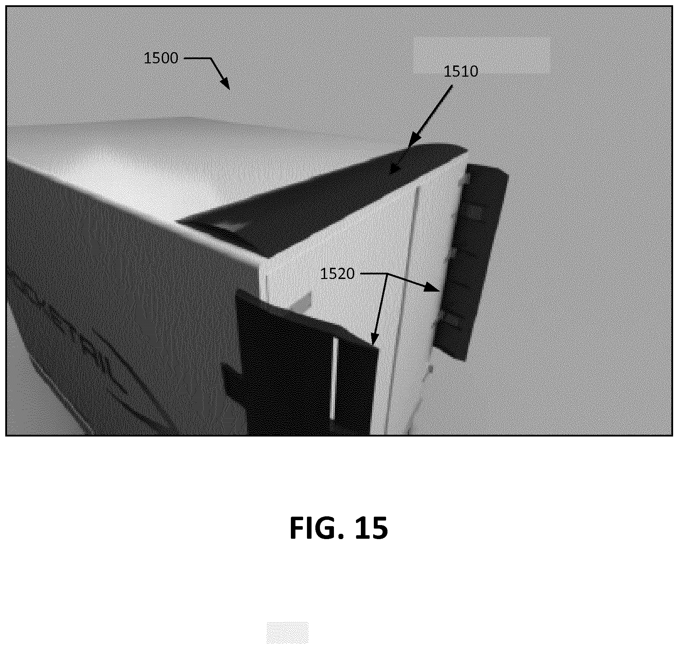

**Fig. 15** is a rear perspective view of a vehicle **1500,** such as a trailer, including a top element **1510** and aerodynamic devices **1520** coupled to the sides of the vehicle in accordance with one embodiment of the present invention. In the illustrated embodiment of **Fig. 15**, the top element **1510** is configured similarly to the convex aerodynamic device 1400 shown in **FIG. 14** and each of the aerodynamic devices 1520 is configured similarly to the aerodynamic device 1300 shown in **Figs. 13A** to **13C****.**

It will be appreciated that any combination of the elements discussed herein in the configuration of an apparatus for the aerodynamic improvement of a vehicle may be configured according to the vehicle of application and may be reconfigured accordingly with respect to scale, proportion and configuration while comprising the inventive elements of the apparatus as discussed herein.

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings. It is understood that the invention may be embodied in other specific forms without departing from the scope of the claims. The present examples and embodiments, therefore, are to be considered in all respects as illustrative and not restrictive, and the invention is not to be limited to the details given herein. The terms "first," "second," "proximal," "distal," etc., as used herein, are intended for illustrative purposes only and do not limit the embodiments in any way. Additionally, the term "plurality," as used herein, indicates any number greater than one. The benefits, advantages, solutions to problems, and any element(s) that may cause any benefit, advantage, or solution to occur or become more pronounced are not to be construed as a critical, required, or essential features or elements of any or all the claims.

## Claims

1. An apparatus for the improvement of vehicle aerodynamics comprising:
mounting features (8000, 8020);
an airfoil (1010) and a stabilizer (1020), said airfoil and stabilizer being separated by a predetermined distance and being interconnected by a plurality of stiffeners (1030);
said plurality of stiffeners being offset from each other;
an aperture (1040) defined by a trailing edge of said airfoil, a leading edge of said stabilizer, a first stiffener and a second stiffener; and
said mounting features being configured to affix to an external surface (4010) of a ground vehicle (2000) with a leading edge of said airfoil proximate to said external surface.

2. The apparatus of claim 1, wherein said leading edge of said airfoil further comprises an edge for mating with the trailing vertical edge of said ground vehicle.

3. The apparatus of claim 1 or claim 2, wherein at least two of said stiffeners are mounting stiffeners, allowing for the fixation of mounting features.

4. The apparatus of any one of claims 1 to 3, wherein at least two of said stiffeners are mounting stiffeners, said mounting stiffeners further comprising a channel recess.

5. The apparatus of any one of claims 1 to 4, wherein said mounting features further comprise hinged mounts for hinged fixation to said ground vehicle.

6. The apparatus of claim 5, further comprising a tensile component affixed to said aerodynamic device, said tensile component having a first end affixed to said aerodynamic device and a second end affixed to the aft-plane of said ground vehicle; wherein said tensile component maintains a maximum angle of separation between said aerodynamic device and said aft-plane of said ground vehicle.

7. The apparatus of any one of the preceding claims, wherein said apparatus extends rearward from an aft-plane of said ground vehicle.

8. The apparatus of any one of the preceding claims, wherein said airfoil comprises a thin-form airfoil.

9. A system for the improvement of vehicle aerodynamics comprising:
a first aerodynamic device having mounting features (8000, 8020), said first aerodynamic device further comprising an airfoil (1010) and a stabilizer (1020);
a second aerodynamic device having mounting features (8000, 8020);
said second aerodynamic device further comprising an airfoil (1010) and a stabilizer 91020);
said airfoil and stabilizer of said first aerodynamic device being separated by a predetermined distance and being interconnected by a plurality of stiffeners (1030);
said plurality of stiffeners of said first aerodynamic device having an offset from each other;
a first aperture (1040) defined by a trailing edge of said airfoil of said first aerodynamic device, a leading edge of said stabilizer of said first aerodynamic device, a first stiffener of said first aerodynamic device and a second stiffener of said first aerodynamic device;
said airfoil and stabilizer of said second aerodynamic device being separated by a predetermined distance and being interconnected by a plurality of stiffeners;
said plurality of stiffeners of said second aerodynamic device being offset from each other;
a second aperture defined by a trailing edge of said airfoil of said second aerodynamic device, a leading edge of said stabilizer of said second aerodynamic device, a first stiffener of said second aerodynamic device and a second stiffener of said second aerodynamic device;
said first aerodynamic device being configured to affix to a first external surface (4010) of a ground vehicle (2000) with a portion of said airfoil of said first aerodynamic device proximate to said first external surface with said first aerodynamic device extending rearward from an aft-plane of said ground vehicle; and
said second aerodynamic device being configured to affix to a second external surface of said ground vehicle with a portion of said airfoil of said second aerodynamic device proximate to said second external surface with said second aerodynamic device extending rearward from said aft-plane of said ground vehicle.

10. The system of claim 9, wherein said mounting features further comprise hinged mounts.

11. The system of claim 9 or claim 10, wherein said first aerodynamic device further comprises a first tensile component affixed to said first aerodynamic device, said first tensile component having a first end affixed to said aerodynamic device and a second end affixed to the aft-plane of said ground vehicle; and
said second aerodynamic device further comprising a second tensile component affixed to said first aerodynamic device, said second tensile component having a first end affixed to said second aerodynamic device and a second end affixed to the aft-plane of said ground vehicle;
wherein said first tensile component is configured to maintain a maximum predetermined device offset angle between said first aerodynamic device and said aft-plane of said ground vehicle and said second tensile component is configured to maintain a maximum predetermined device offset angle between said second aerodynamic device and said aft-plane of said ground vehicle.

## Patentansprüche

1. Vorrichtung zur Verbesserung von Fahrzeugaerodynamik, die Folgendes umfasst:
Montagemerkmale (8000, 8020);
ein aerodynamisches Profil (1010) und einen Stabilisator (1020), wobei das aerodynamische Profil und der Stabilisator um einen vorbestimmten Abstand getrennt sind und über mehrere Versteifungen (1030) miteinander verbunden sind;
wobei die mehreren Versteifungen gegeneinander versetzt sind;
eine Öffnung (1040), definiert durch eine Hinterkante des aerodynamischen Profils, eine Vorderkante des Stabilisators, eine erste Versteifung und eine zweite Versteifung; und
wobei die Montagemerkmale ausgelegt sind zum Befestigen an einer äußeren Oberfläche (4010) eines Bodenfahrzeugs (2000), wobei eine Vorderkante des aerodynamischen Profils nahe der äußeren Oberfläche ist.

2. Vorrichtung nach Anspruch 1, wobei die Vorderkante des aerodynamischen Profils ferner eine Kante zum Zusammenfügen mit der vertikalen Hinterkante des Bodenfahrzeugs umfasst.

3. Vorrichtung nach Anspruch 1 oder Anspruch 2, wobei mindestens zwei der Versteifungen Montageversteifungen sind, die das Befestigen von Montagemerkmalen ermöglichen.

4. Vorrichtung nach einem der Ansprüche 1 bis 3, wobei die mindestens zwei Versteifungen Montageversteifungen sind, wobei die Montageversteifungen ferner eine Kanalvertiefung umfassen.

5. Vorrichtung nach einem der Ansprüche 1 bis 4, wobei die Montagemerkmale ferner schwenkbare Montageelemente zur schwenkbaren Befestigung an dem Bodenfahrzeug umfassen.

6. Vorrichtung nach Anspruch 5, ferner umfassend eine Zugkomponente, die an der aerodynamischen Vorrichtung befestigt ist, wobei die Zugkomponente ein erstes Ende, das an der aerodynamischen Vorrichtung befestigt ist, und ein zweites Ende, das an der Heckebene des Bodenfahrzeugs befestigt ist, aufweist; wobei die Zugkomponente einen maximalen Winkel an Trennung zwischen der aerodynamischen Vorrichtung und der Heckebene des Bodenfahrzeugs aufrechterhält.

7. Vorrichtung nach einem der vorhergehenden Ansprüche, wobei sich die Vorrichtung ausgehend von einer Heckebene des Bodenfahrzeugs nach hinten erstreckt.

8. Vorrichtung nach einem der vorhergehenden Ansprüche, wobei das aerodynamische Profil ein aerodynamisches Dünnformprofil umfasst.

9. System zur Verbesserung von Fahrzeugaerodynamik, das Folgendes umfasst:
eine erste aerodynamische Vorrichtung mit Montagemerkmalen (8000, 8020), wobei die erste aerodynamische Vorrichtung ferner ein aerodynamisches Profil (1010) und einen Stabilisator (1020) umfasst;
eine zweite aerodynamische Vorrichtung mit Montagemerkmalen (8000, 8020);
wobei die zweite aerodynamische Vorrichtung ferner ein aerodynamisches Profil (1010) und einen Stabilisator 91020) umfasst;
wobei das aerodynamische Profil und der Stabilisator der ersten aerodynamischen Vorrichtung um einen vorbestimmten Abstand getrennt sind und über mehrere Versteifungen (1030) miteinander verbunden sind;
wobei die mehreren Versteifungen der ersten aerodynamischen Vorrichtung einen Versatz gegeneinander aufweisen;
eine erste Öffnung (1040), definiert durch eine Hinterkante des aerodynamischen Profils der ersten aerodynamischen Vorrichtung, eine Vorderkante des Stabilisators der ersten aerodynamischen Vorrichtung, eine erste Versteifung der ersten aerodynamischen Vorrichtung und eine zweite Versteifung der ersten aerodynamischen Vorrichtung;
wobei das aerodynamische Profil und der Stabilisator der zweiten aerodynamischen Vorrichtung um einen vorbestimmten Abstand getrennt sind und über mehrere Versteifungen miteinander verbunden sind;
wobei die mehreren Versteifungen der zweiten aerodynamischen Vorrichtung gegeneinander versetzt sind;
eine zweite Öffnung, definiert durch eine Hinterkante des aerodynamischen Profils der zweiten aerodynamischen Vorrichtung, eine Vorderkante des Stabilisators der zweiten aerodynamischen Vorrichtung, eine erste Versteifung der zweiten aerodynamischen Vorrichtung und eine zweite Versteifung der zweiten aerodynamischen Vorrichtung;
wobei die erste aerodynamische Vorrichtung dazu ausgelegt ist, mit einem Teil des aerodynamischen Profils der ersten aerodynamischen Vorrichtung nahe der ersten äußeren Oberfläche an einer ersten äußeren Oberfläche (4010) eines Bodenfahrzeugs (2000) befestigt zu werden, wobei sich die erste aerodynamische Vorrichtung von einer Heckebene des Bodenfahrzeugs nach hinten erstreckt; und
wobei die zweite aerodynamische Vorrichtung dazu ausgelegt ist, mit einem Teil des aerodynamischen Profils der zweiten aerodynamischen Vorrichtung nahe der zweiten äußeren Oberfläche an einer zweiten äußeren Oberfläche des Bodenfahrzeugs befestigt zu werden, wobei sich die zweite aerodynamische Vorrichtung von der Heckebene des Bodenfahrzeugs nach hinten erstreckt.

10. System nach Anspruch 9, wobei die Montagemerkmale ferner klappbare Montageelemente umfassen.

11. System nach Anspruch 9 oder Anspruch 10, wobei die erste aerodynamische Vorrichtung ferner eine erste Zugkomponente umfasst, die an der ersten aerodynamischen Vorrichtung befestigt ist, wobei die erste Zugkomponente ein erstes Ende, das an der aerodynamischen Vorrichtung befestigt ist, und ein zweites Ende, das an der Heckebene des Bodenfahrzeugs befestigt ist, aufweist; und
wobei die zweite aerodynamische Vorrichtung ferner eine zweite Zugkomponente umfasst, die an der ersten aerodynamischen Vorrichtung befestigt ist, wobei die zweite Zugkomponente ein erstes Ende, das an der zweiten aerodynamischen Vorrichtung befestigt ist, und ein zweites Ende, das an der Heckebene des Bodenfahrzeugs befestigt ist, aufweist;
wobei die erste Zugkomponente dazu ausgelegt ist, einen maximalen vorbestimmten Vorrichtungsversatzwinkel zwischen der ersten aerodynamischen Vorrichtung und der Heckebene des Bodenfahrzeugs aufrechtzuerhalten und die zweite Zugkomponente dazu ausgelegt ist, einen maximalen vorbestimmten Vorrichtungsversatzwinkel zwischen der zweiten aerodynamischen Vorrichtung und der Heckebene des Bodenfahrzeugs aufrechtzuerhalten.

## Revendications

1. Appareil pour l'amélioration de l'aérodynamique d'un véhicule, comprenant :
des éléments de montage (8000, 8020) ;
une surface portante (1010) et un stabilisateur (1020), lesdits surface portante et stabilisateur étant séparés d'une distance prédéterminée et étant reliés entre eux par une pluralité de raidisseurs (1030) ;
ladite pluralité de raidisseurs étant décalés les uns par rapport aux autres ;
une ouverture (1040) définie par un bord de fuite de ladite surface portante, un bord d'attaque dudit stabilisateur, un premier raidisseur et un deuxième raidisseur ; et
lesdits éléments de montage étant configurés pour se fixer à une surface externe (4010) d'un véhicule terrestre (2000), un bord d'attaque de ladite surface portante se situant à proximité de ladite surface externe.

2. Appareil selon la revendication 1, dans lequel ledit bord d'attaque de ladite surface portante comprend en outre un bord destiné à s'accoupler au bord de fuite vertical dudit véhicule terrestre.

3. Appareil selon la revendication 1 ou la revendication 2, dans lequel au moins deux desdits raidisseurs sont des raidisseurs de montage permettant la fixation d'éléments de montage.

4. Appareil selon l'une quelconque des revendications 1 à 3, dans lequel au moins deux desdits raidisseurs sont des raidisseurs de montage, lesdits raidisseurs de montage comprenant en outre un renfoncement formant canal.

5. Appareil selon l'une quelconque des revendications 1 à 4, dans lequel lesdits éléments de montage comprennent en outre des montures articulées destinées à se fixer de façon articulée sur ledit véhicule terrestre.

6. Appareil selon la revendication 5, comprenant en outre un composant de traction fixé audit dispositif aérodynamique, ledit composant de traction présentant une première extrémité fixée audit dispositif aérodynamique et une deuxième extrémité fixée au plan arrière dudit véhicule terrestre ; dans lequel ledit composant de traction maintient un angle de séparation maximal entre ledit dispositif aérodynamique et ledit plan arrière dudit véhicule terrestre.

7. Appareil selon l'une quelconque des revendications précédentes, lequel appareil s'étend vers l'arrière à partir d'un plan arrière dudit véhicule terrestre.

8. Appareil selon l'une quelconque des revendications précédentes, dans lequel ladite surface portante comprend une surface portante de forme mince.

9. Système pour l'amélioration de l'aérodynamique d'un véhicule, comprenant :
un premier dispositif aérodynamique doté d'éléments de montage (8000, 8020), ledit premier dispositif aérodynamique comprenant en outre une surface portante (1010) et un stabilisateur (1020) ;
un deuxième dispositif aérodynamique doté d'éléments de montage (8000, 8020) ;
ledit deuxième dispositif aérodynamique comprenant en outre une surface portante (1010) et un stabilisateur 91020) ;
lesdits surface portante et stabilisateur dudit premier dispositif aérodynamique étant séparés d'une distance prédéterminée et étant reliés entre eux par une pluralité de raidisseurs (1030) ;
ladite pluralité de raidisseurs dudit premier dispositif aérodynamique présentant un décalage les uns par rapport aux autres ;
une première ouverture (1040) définie par un bord de fuite de ladite surface portante dudit premier dispositif aérodynamique, un bord d'attaque dudit stabilisateur dudit premier dispositif aérodynamique, un premier raidisseur dudit premier dispositif aérodynamique et un deuxième raidisseur dudit premier dispositif aérodynamique ;
lesdits surface portante et stabilisateur dudit deuxième dispositif aérodynamique étant séparés d'une distance prédéterminée et étant reliés entre eux par une pluralité de raidisseurs ;
ladite pluralité de raidisseurs dudit deuxième dispositif aérodynamique présentant un décalage les uns par rapport aux autres ;
une deuxième ouverture définie par un bord de fuite de ladite surface portante dudit deuxième dispositif aérodynamique, un bord d'attaque dudit stabilisateur dudit deuxième dispositif aérodynamique, un premier raidisseur dudit deuxième dispositif aérodynamique et un deuxième raidisseur dudit deuxième dispositif aérodynamique ;
ledit premier dispositif aérodynamique étant configuré pour se fixer à une première surface externe (4010) d'un véhicule terrestre (2000), une partie de ladite surface portante dudit premier dispositif aérodynamique se situant à proximité de ladite première surface externe, ledit premier dispositif aérodynamique s'étendant vers l'arrière depuis un plan arrière dudit véhicule terrestre ; et
ledit deuxième dispositif aérodynamique étant configuré pour se fixer à une deuxième surface externe dudit véhicule terrestre, une partie de ladite surface portante dudit deuxième dispositif aérodynamique se situant à proximité de ladite deuxième surface externe, ledit deuxième dispositif aérodynamique s'étendant vers l'arrière depuis ledit plan arrière dudit véhicule terrestre.

10. Système selon la revendication 9, dans lequel lesdits éléments de montage comprennent en outre des montures articulées.

11. Système selon la revendication 9 ou la revendication 10, dans lequel ledit premier dispositif aérodynamique comprend en outre un premier composant de traction fixé audit premier dispositif aérodynamique, ledit premier composant de traction présentant une première extrémité fixée audit dispositif aérodynamique et une deuxième extrémité fixée au plan arrière dudit véhicule terrestre ; et
ledit deuxième dispositif aérodynamique comprend en outre un deuxième composant de traction fixé audit premier dispositif aérodynamique, ledit deuxième composant de traction présentant une première extrémité fixée audit deuxième dispositif aérodynamique et une deuxième extrémité fixée au plan arrière dudit véhicule terrestre;
ledit premier composant de traction étant configuré pour maintenir un angle de décalage de dispositif maximal prédéterminé entre ledit premier dispositif aérodynamique et ledit plan arrière dudit véhicule terrestre, et ledit deuxième composant de traction étant configuré pour maintenir un angle de décalage de dispositif maximal prédéterminé entre ledit deuxième dispositif aérodynamique et ledit plan arrière dudit véhicule terrestre.
